Europäisches Patentamt

European Patent Office

Office européen des brevets

(11) Veröffentlichungsnummer: **0 250 900**
**A2**

## (12) EUROPÄISCHE PATENTANMELDUNG

(21) Anmeldenummer: **87107982.8**

(22) Anmeldetag: **02.06.87**

(51) Int. Cl.⁴: **G02B 6/44**

(30) Priorität: **25.06.86 DE 3621168**

(43) Veröffentlichungstag der Anmeldung:
**07.01.88 Patentblatt 88/01**

(84) Benannte Vertragsstaaten:
**AT BE CH DE FR GB LI SE**

(71) Anmelder: **Siemens Aktiengesellschaft Berlin
und München**
**Wittelsbacherplatz 2**
**D-8000 München 2(DE)**

(72) Erfinder: **Steiner, Ewald, Ing.(grad.)**
**Fichtenweg 1**
**D-8137 Berg 3(DE)**

(54) **Verteiler für Telekommunikationsanlagen mit Lichtwellenleitern.**

(57) In dem Verteiler werden Innenleitungen (7,7')
und Außenleitungen (2) durch Rangierleitungen (4)
miteinander verbunden. Die Innenleitungen (7,7')
sind mit den Rangierleitungen (4) durch Spleiße (8)
in Innenspleißtaschen (5,6) verbunden. Die
Außenleitungen (2) sind mit den Rangierleitungen
(4) durch Spleiße (8) in Außenspleißtaschen (3) verbunden. Die Rangierleitungen weisen in die Nähe
der Außenspleißtaschen (3) Steckverbindungen (11)
auf. Diese sind innerhalb eines Leitungszuges die
einzige Steckverbindung, sodaß die Anzahl der teuren Steckverbindungen (11) gering gehalten werden
kann.

FIG 1

EP 0 250 900 A2

## Verteiler für Telekommunikationsanlagen mit Lichtwellenleitern

Die Erfindung bezieht sich auf einen Verteiler für Telekommunikationsalagen mit Lichtwellenleitern, die als Außenleitungen an den Verteiler herangeführt und in diesem mit Lichtwellenleitern verbunden sind, die als Innenleitungen zu den Vermittlungseinrichtungen führen.

Bisher war es üblich, z.B. in Fernsprechvermittlunganlagen zwischen den elektrischen Innen-und Außenleitungen elektrische Rangierleitungen vorzusehen, durch die eine wahlfreie Verbindung hergestellt werden konnte. In modernen Vermittlungstechniken ersetzen Glasfasern zunehmend die elektrischen Leitungen. Dabei ergibt sich der Nachteil, daß die trennbaren Steckverbindungen sehr aufwendig herzustellen sind. Beim Anschließen von Steckerteilen ist es erforderlich, vom anderen Leitungsende her Lichtsignale zu senden um das Steckerteil optimal anschließen zu können. Dies ist bei den sehr langen Außenleitungen, die z.B. vom Amt über mehrere Kilometer zu den verschiedenen Teilnehmern führen, bereits organisatorisch sehr - schwer durchzuführen. Außerdem sind die Außenleitungen unterschiedlich lang, sodaß am anzuschließenden Steckerteil kein genau definiertes Lichtsignal empfangen werden kann.

Nicht trennbare Spleißverbindungen können in hoher Qualität ohne eine derartige Funktionsprüfung hergestellt werden. Die Güte der Spleißstelle kann von außen mit optischen Hilfsmitteln erkannt werden.

Der Erfindung liegt die Aufgabe zugrunde, einen Verteiler in Glasfasertechnik mit rangierbaren Leitungen und einer möglichst geringen Anzahl von Steckverbindungen zu schaffen.

Diese Aufgabe wird durch die Erfindung gemäß Anspruch 1 gelöst. Damit ist die Mehrzahl aller Verbindungen in der hochwertigen und kostengünstigen Spleißtechnik hergestellt. Dafür gibt es einfach und sicher zu handhabende Handgeräte, die unschwierig im Verteilerbereich eingesetzt werden. Die Rangierleitungen mit den Steckverbindungen können werksseitig in hoher Qualität vorgefertigt werden. Pro Leitung wird somit nur eine einzige Steckverbindung benötigt. Diese ist unabdingbar, da auf die Möglichkeit der Trennung und Änderung von Leitungszügen nicht verzichtet werden kann. Dabei werden die gebündelten Außenleitungen ebenso wie die gebündelten Innenleitungen an den Spleißtaschen mit Überlänge fixiert. Das Spleißgerät verbindet thermisch die Enden der Rangierleitung mit den Enden der Innen-bzw. Außenleitungen. Durch die Steckverbindung ist es in einfacher Weise möglich, die Rangierleitung zu trennen und in geänderter Kombination mit einer anderen Außenleitung zu verbinden.

Vorteilhafte Weiterbildungen der Erfindung sind in den Ansprüchen 2 - 7 gekennzeichnet:

Durch die Weiterbildung nach Anspruch 2 ist eine der beiden Steckverbinderhälften einer Außenleitung zugeordnet und kann dadurch leichter aufgefunden werden. Die Überlänge des anderen Abschnitts der Rangierleitung ermöglicht es, eine weiter entfernte Außenleitung zu errreichen. Extreme Entfernungen zwischen den Innen-und Außenleitungen können mit zusätzlichen Steckerleitungen überbrückt werden. Da dies jedoch in modernen Vermittlungssystemen selten erforderlich sein dürfte, verteuert die zusätzliche Steck verbindungsstelle die gesamte Verteileranlage nur unwesentlich.

Durch die Weiterbildung nach Anspruch 3 ist es möglich, die verschiedenen Teilnehmer je nach Bedarf mit Breitband-und Schmalbandanschlüssen zu versehen. Die Rangierleitungen verlaufen dann von den Außenspleißtaschen wahlweise zu den Breitband - oder Schmalbandspleißtaschen.

Durch die Weiterbildung nach Anspruch 4 kann ein und der selbe Teilnehmer sowohl mit dem breitbandigen als auch mit dem schmalbandigen Teil der Vermittlungsanlage verbunden werden. Dabei weisen die Breitbandspleißtaschen wegen der unterzubringenden Verzweigerbausteine und der höheren Anzahl von Leitungen und Verbindungstellen größere Abmessungen als die Schmal- und Außenspleißtaschen auf.

Durch die Weiterbildung nach Anspruch 5 ergibt sich ein senkrecht hängender Verlauf der Rangierleitungen. Diese sind knick-und spannungsfrei, sodaß die Bruchgefahr gering ist. Der senkrecht glatte Verlauf erhöht die Übersichtlichkeit und erleichtert die Zuordnung der Rangierleitungen zu den Spleißtaschen. Da die Steckverbinder am unteren Ende der Rangierleitungen angeordnet sind, hängt auch im Fall der Trennung der größte Teil der Rangierleitung glatt herunter.

Durch die Weiterbildung nach Anspruch 6 ist es möglich, die Spleißtaschen in einzelnen gleichbreiten Säulen übereinander anzuordnen. Dadurch ergeben sich zwischen den Spleißtaschenfeldern glatte Verlegebahnen die optimal mit Leitungen belegt werden können. Läßt man zwischen den verschiedenen senkrecht übereinander angeordneten Anschlußbereichen einen hinreichenden Abstand, so können die Rangierleitungen auch abschnittsweise waagerecht geführt und zu anderen Spleißtaschenfeldern geführt werden.

Durch die Weiterbildung nach Anspruch 7 wird die Schmalbandspleißtasche in ihren Abmessungen optimal ausgenutzt, sodaß der entsprechende Verteilerbereich eine geringe Höhe aufweist.

Im folgenden wird die Erfindung anhand eines in der Zeichnung dargestellten Ausführungsbeispieles näher erläutert:

Figur 1 zeigt schematisch den Verlauf von Lichtwellenleiterzügen in einem Verteiler für Telekommunikationsanlagen,

Figur 2 schematisiert eine Draufsicht auf einen Teil des Verteilers nach Figur 1,

Figur 3 eine Draufsicht auf eine Außenspleißtasche des Verteilers nach Figur 1 und 2,

Figur 4 eine Draufsicht auf eine Breitbandspleißtasche des Veteilers nach Figur 1 und 2.

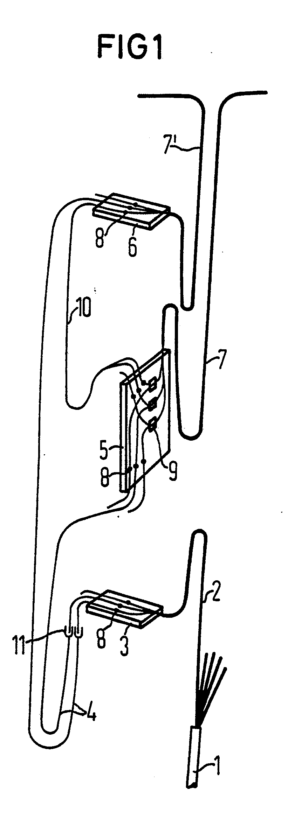

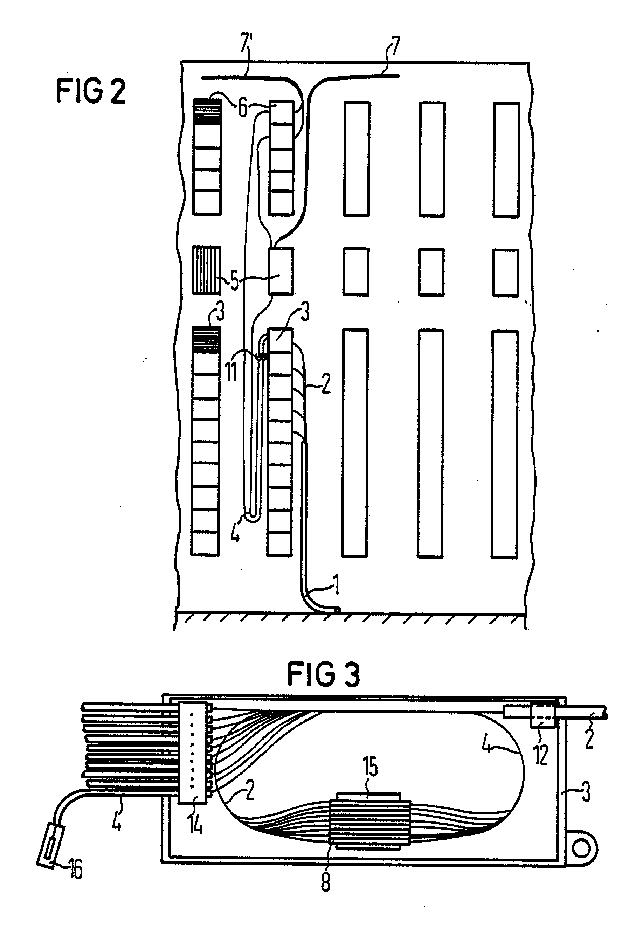

Nach den Figuren 1 und 2 ist ein Kabel 1 mit Bündeln von als Lichtwellenleitern ausgebildeten Außenleitungen 2 an waagerecht liegende flache Außenspleißtaschen 3 herangeführt, in denen sich die Enden der Außenleitungen 2 verzweigen. Diese sind mit den Enden von Rangierleitungen 4 durch Spleise 8 verbunden. Die Rangierleitungen 4 verlaufen mit Überlänge zu den Innenspleistaschen 5,6. Diese sind in einer Ebene oberhalb der Außenspleißtaschen 3 angeordnet. Die Innenspleißtaschen 5,6 können entweder als Breitbandspleißtaschen 5 oder Schnalbandspleißtaschen 6 ausgebildet sein. In den Innenspleißtaschen 6 sind die als Lichtwellenleiter ausgebildeten Rangierleitungen 4 mit zu einem schmalbandigen Teil der Vermittlungsanlage führenden Schmalbandleitungen 7′ durch die Spleiße 8 verbunden. Die an Ort und Stelle mittels eines Spleißgerätes hergestellt werden. können. Ein Teil der Rangierleitungen 4 verläuft von den Außenspleißtaschen 3 zu den Breitbandspleißtaschen 5. Diese sind mit Verzweigerbausteinen 9 versehen, an die zu einem breitbandigen Teil der Telekommunikationsanlage führende Breitbandleitungen 7 angeschlossen sind. Die Verzweigerbausteine 9 sind mittels der Spleiße 8 mit den Rangierleitungen 4 verbunden. Andere Verbindungsleitungen führen von den Verzweigerbausteinen 9 zu den Schmalbandspleißtaschen 6. Dadurch ist es möglich, einen Teilnehmer sowohl - schmal-als auch breitbandig an die Vermittlungsanlage anzuschließen. Die Breitbandspleißtaschen 5 sind senkrecht stehend waagerecht bis zur Breite der waagerecht liegenden Außenspleißtaschen 3 bzw. Schmalbandspleißtaschen 6 aneinandergereiht. Die Außenspleißtaschen 3 und die Schmalbandspleißtaschen 6 sind in mehreren mit Abstand nebeneinanderstehenden Säulen senkrecht übereinandergeschichtet. Dabei befinden sich die Schmalbandspleißtaschen 6 im oberen, die Breitbandspleißtaschen 5 im mittleren und die Außenspleißtaschen 3 im unteren Verteilerbereich. Die Spleißtaschen bilden innerhalb der einzelnen Säulen Spleißtaschenfelder, die zueinander fluchten. Dadurch ergeben sich zwischen den Spleißtaschenfeldern glatt verlaufende senkrechte Verlegebahnen, in denen die verschiedenen Leitungen angeordnet sind.

Die Rangierleitungen 4 sind mit Steckverbindungen 11 versehen. Diese befinden sich in unmittelbarer Nähe der Außenspleißtaschen 3, wobei der entsprechende Abschnitt der Rangierleitung 4 sehr kurz ist. Das zugehörige Steckerteil kann an der Außenseite der Außenspleißtasche 3 fest angebracht sein, sodaß seine Zuordnung zu dieser genau definiert ist.

Die Außenspleißtasche 3 nach Figur 3 ist mit der Schmalbandspleißtasche 6 (FIG 1) baugleich. Ein Bündel der Außenleitungen 2 ist mittels einer Schelle 12 an der Außenspleißtasche 3 festgelegt. Die Außenleitungen 2 sind in einem Bogen in der Außenspleißtasche 3 verlegt und enden in den Spleisen 8. Die Rangierleitungen 4 sind mittels eines Bügels 14 auf der gegenüberliegenden Seite der Schelle 12 an der Außenspleißtasche 3 festgelegt. Sie sind ebenfalls bogenförmig zu den Spleißen 8 verlegt, die die Außenleitungen 2 und die Rangierleitungen 4 miteinander verbinden. Die Spleiße 8 sind in einem Spleißhalter 15 im mittleren Bereich der Außenspleißtasche 3 gehalten. Die Rangierleitungen 4 sind mit Steckverbindungen 11 (FIG 1) versehen, deren Stiftteil 16 in der Nähe der Außenspleißtasche 3 angeordnet ist.

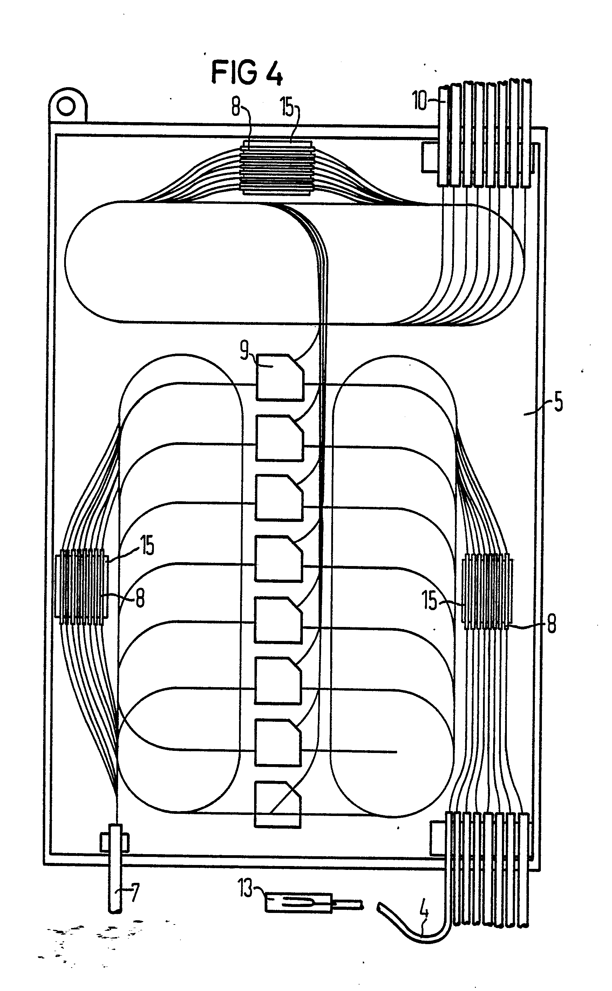

Nach Figur 4 ist eine als Breitbandspleißtasche 5 ausgebildete Innenspleißtasche im mittleren Bereich mit den in Längsrichtung aneinandergereihten Verzweigerbausteinen 9 versehen. Aus diesen sind 3 Lichtwellenleiterabschnitte herausgeführt, die über die Spleise 8 mit den Rangierleitungen 4, den Verbindungsleitungen 10 und den zum Breitbandleitungen 7 verbunden sind. Die Spleiße 13 sind ähnlich wie in Figur 3 in Spleißhaltern 15 nebeneinander gehalten. Die zum Herstellen der Spleiße erforderlichen Drahtschlaufen sind zu beiden Seiten der Verzweigerbausteine 9 bzw. stirnseitig in Querrichtung bei guter Raumausnützung in der flachen Breitbandspleißtasche 5 angeordnet. Der längere Abschnitt der Rangierleitungen 4 endet in einem Buchsenteil 17 der Steckverbindung 11. Dieser Abschnitt der Rangierleitung 4 ist so lang, daß er an die Stiftteile 16 (Figur 3) verschiedener Außenspleistaschen 3 herangeführt werden kann.

**Ansprüche**

1) Verteiler für Telekommunikationsanlagen mit Lichtwellenleitern, die als Außenleitungen an den Verteiler herangeführt und in diesem mit Lichtwellenleitern verbunden sind, die als Innenleitungen zu den Vermittlungseinrichtungen führen, **dadurch gekennzeichnet,**

daß die Außenleitungen (2) in Außenspleißtaschen (3) enden, in denen mehrere Leitungen zusammengefasst sind, daß die Außenspleißtaschen (3) in einem Außenanschlußbereich des Verteilers angeordnet sind, daß die Innenleitungen (7) in Innenspleißtaschen (5,6) enden, die in einem Innenanschlußbereich des Verteilers angeordnet sind und daß zwischen den Innenspleißtaschen (5,6) und den Außenspleißtaschen (3) Rangierleitungen (4) verlaufen, die als Lichtwellenleiter ausgebildet und mit einer Steckverbindung (11) versehen sind.

2) Verteiler nach Anspruch 1,
**dadurch gekennzeichnet,**
daß der Abschnitt der Rangierleitung (4) zwischen dem Steckverbinder (11) und der Außenspleißtasche (2) kurz ist, daß der Abschnitt der Rangierleitung (4) zwischen dem Steckverbinder (11) und der Innenspleißtasche (5,6) mit einer Überlänge versehen ist.

3) Verteiler nach Anspruch 1 oder 2,
**dadurch gekennzeichnet,**
daß der Innenanschlußbereich des Verteilers in einen Anschlußbereich für Schmalbandleitungen (7') und einen Anschlußbereich für Breitbandleitungen (7) der Telekommunikationsanlage unterteilt ist und daß demgemäß die Innenspleißtaschen als Schmalbandspleißtaschen (6) und Breitbandspleißtaschen (5) ausgebildet sind.

4) Verteiler nach Anspruch 3,
**dadurch gekennzeichnet,**
daß die Breitbandspleißtaschen (5) mit Verzweigerbausteinen (9) versehen sind, an denen die Rangierleitungen (4) die Breitbandleitungen (7) sowie die Schmalbandleitungen (7') angeschlossen sind.

5) Verteiler nach Anspruch 4,
**dadurch gekennzeichnet,**
daß die Schmalbandspleißtaschen (6), die Breitbandspleißtaschen (5) und die Außenspleißtaschen (3) in einer senkrechten Verteilerebene angeordnet sind, in der im oberen Bereich die Schmalbandspleißtaschen (6), im mittleren Bereich die Breitbandspleißtaschen (5) und im unteren Bereich die Außenspleißtaschen (3) angeordnet sind.

6) Verteiler nach Anspruch 4 oder 5,
**dadurch gekennzeichnet,**
daß die Außenspleißtaschen (3) und die Schmalbandspleißtaschen (6) zumindest annähernd gleiche Breite aufweisen und waagerecht liegend senkrecht übereinandergeschichtet sind und daß die Breitbandspleißtaschen (5) senkrecht stehend bis ungefähr zur Breite der Schmalbandspleißtaschen (6) aneinandergereiht sind.

7) Verteiler nach einem der vorhergehenden Ansprüche,
**dadurch gekennzeichnet,**
daß die Verzweigerbausteine (9) in der Mitte der Breitbandspleißtasche (5) in Längsrichtung aneinandergereiht sind, daß zu beiden Seiten der Verzweigerbausteine (9) Reserveschlaufen der Lichtwellenleiter angeordnet sind und daß sich eine dritte Reserveschlaufe stirnseitig quer zu den beiden anderen Reserveschlaufen erstreckt.

# FIG 1

**FIG 2**

**FIG 3**

## FIG 4